# EUROPÄISCHE PATENTANMELDUNG

(11) **EP 0 852 168 A1**
(43) Veröffentlichungstag der Anmeldung: **08.07.1998**
(21) Anmeldenummer: 97119460.0
(22) Anmeldetag: 06.11.1997
(51) Int. Cl.: B23G 5/18

(54) **Gewindefräser**

(30) Priorität: 11.12.1996 DE 19651425
(71) Anmelder: Joh. & Ernst Link GmbH & Co. KG, D-70565 Stuttgart (DE)
(72) Erfinder:
(74) Vertreter: Jackisch-Kohl, Anna-Katharina

(57) **Zusammenfassung**

Der Gewindefräser hat einen Schaft (1) und einen Frästeil (3), der in Umfangsebenen liegende Gewindezähne (7) aufweist, die in Teilungen angeordnet sind. Damit mit dem Gewindefräser große Gewindelängen hergestellt werden können, ohne daß die Gefahr eines Bruches besteht, fehlen in Abständen die Gewindezähne (7) von Teilungen innerhalb einer Umfangsebene vollständig. Der Gewindefräser weist somit in bestimmten Abständen freie Teilungen ohne Gewindezählungen auf. Die Schnittkräfte werden dadurch erheblich reduziert und das Biegemoment im kritischen Bereich am Übergang vom Frästeil zum Schaft wesentlich verringert.

## Beschreibung

Die Erfindung betrifft einen Gewindefräser nach dem Oberbegriff des Anspruches 1.

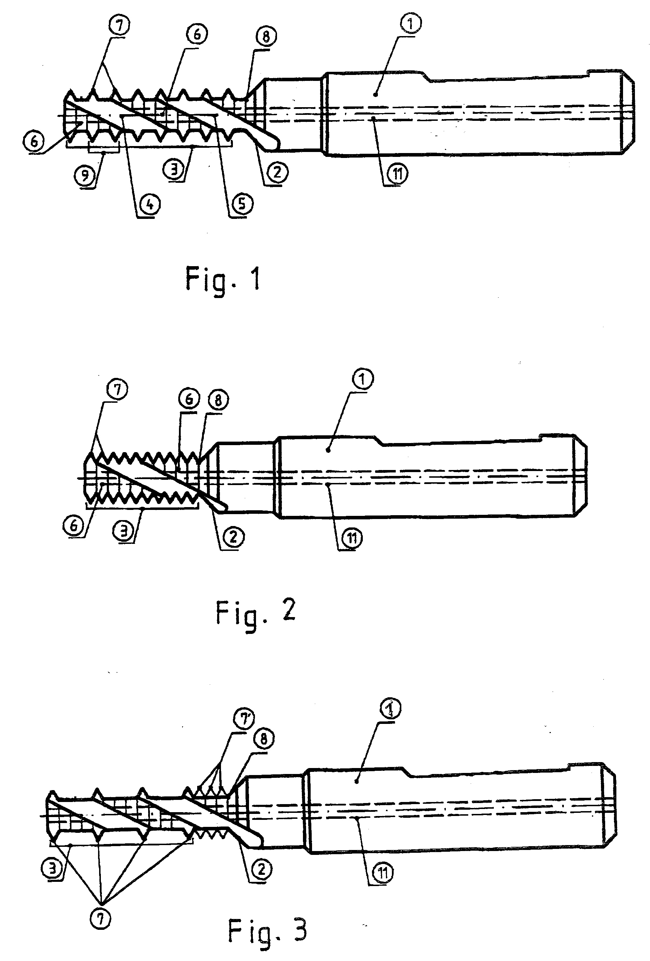

Gewindefräser sind üblicherweise mit Gewindefräszähnen 7 (Fig. 2) entlang des gesamten Frästeiles 3 versehen. Bei großen Gewindelängen, zum Beispiel in Stahl größer als 1,5 x D oder in Aluminium größer als 2 x D, kommt es zu einem erheblichen Anstieg der Belastung des Gewindefräsers beim Fräsvorgang. Infolge der großen Länge des Frästeiles 3 ergibt sich eine erhöhte Schnittkraft. Die Schnittiefe wiederum führt zu einem erhöhten Biegemoment im kritischen Bereich 8 am Übergang vom Frästeil 3 zum Schaftbereich 1 des Gewindefräsers. Darum besteht eine erhöhte Bruchgefahr.

Es ist bekannt, die Radialkräfte dadurch zu reduzieren, daß im vorderen Werkzeugbereich auf eine begrenzte Länge, zum Beispiel ein Drittel der gewünschten Werkstückgewindelänge, ein Gewindeprofil angebracht und damit in mehreren Umläufen jeweils axial versetzt das Gewinde hergestellt wird. Da die Gewindezähne am freien Ende des Frästeiles vorgesehen sind, wirken beim Fräsvorgang die Radialkräfte auf der längsten Auskragung, so daß auch in diesem Falle eine erhöhte Bruchgefahr besteht.

Der Erfindung liegt die Aufgabe zugrunde, den gattungsgemäßen Gewindefräser so auszubilden, daß mit ihm große Gewindelängen hergestellt werden können, ohne daß die Gefahr eines Bruches besteht.

Diese Aufgabe wird beim gattungsgemäßen Gewindefräser erfindungsgemäß mit den kennzeichnenden Merkmalen des Anspruches 1 gelöst.

Beim erfindungsgemäßen Gewindefräser sind in bestimmten Abständen freie Teilungen ohne Gewindezähne ausgeführt. So können beispielsweise in jeder zweiten Teilung die Gewindezähne vollständig fehlen, so daß an der entsprechen-den axialen Position des Frästeiles kein Gewindezahn vorgesehen ist. Die Schnittkräfte werden dadurch erheblich reduziert und das Biegemoment im kritischen Bereich am Übergang vom Frästeil zum Schaft wesentlich reduziert. Dadurch besteht beim Arbeiten mit dem erfindungsgemäßen Gewindefräser keine Bruchgefahr; dennoch lassen sich große Gewindelängen einfach und zuverlässig herstellen.

Weitere Merkmale der Erfindung ergeben sich aus den weiteren Ansprüchen, der Beschreibung und den Zeichnungen.

Die Erfindung wird anhand einiger in den Zeichnungen dargestellter Ausführungsbeispiele näher erläutert. Es zeigen
- Fig. 1: eine erste Ausführungsform eines erfindungsgemäßen Gewindefräsers in Seitenansicht,
- Fig. 2: einen bekannten Gewindefräser in einer Darstellung entsprechend Fig. 1,
- Fig. 3 bis Fig. 5: in Darstellungen entsprechend Fig. 1 weitere Ausführungsformen von erfindungsgemäßen Gewindefräsern.

Das Werkzeug gemäß Fig. 1 ist ein Gewindefräser und hat einen Schaft 1, mit dem das Werkzeug in eine Spindel eines (nicht dargestellten) Antriebes eingesetzt werden kann. An den Schaft 1 schließt ein Senker 2 an, mit dem am zu bearbeitenden Werkstück Senkungen angebracht werden können. Der Senker 2 befindet sich zwischen dem Schaft 1 und einem Frästeil 3, der im Ausführungsbeispiel ein Gewindefrästeil ist, mit dem Gewinde in der Wandung von Bohrungen hergestellt werden können.

Der Frästeil 3 hat zwei gerade oder wendelförmig verlaufende Spannuten 4, 5, die sich vorteilhaft bis in den Senker 2 erstrecken. Durch die Spannuten 4, 5 wird der Frästeil 3 in einzelne Stollen 6 unterteilt, auf denen sich Gewindezähne 7 befinden. Sie sind in Umfangsebenen des Frästeiles 3 mit Abstand voneinander angeordnet, wobei in jeder Umfangsebene mindestens eine der Zahl der Stollen entsprechende Zahl von Gewindezähnen 7 vorgesehen ist. Mit ihnen wird das Gewinde in noch zu beschreibender Weise in einer Bohrungswandung gefräst.

Im Vergleich zum herkömmlichen Gewindefräser nach Fig. 2 fehlen in jeder zweiten Teilung die Gewindezahne 7 vollständig. Der Achsabstand zwischen benachbarten, Gewindezähne 7 enthaltenden Umfangsebenen entspricht somit der doppelten Teilung. Sie ist über die Länge des Frästeiles 3 vorgesehen.

Um mit diesem Werkzeug das Gewinde in der Bohrungswandung zu fräsen, wird das um seine Achse rotierende Werkzeug um die Achse der Gewindebohrung umlaufend bewegt. Aufgrund der vorhandenen freien Teilungen am Werkzeug von Fig. 2 sind zur Erzeugung des Gewindes beim Gewindefräsvorgang zwei Umläufe um die Achse der Bohrung erforderlich. Während jedes dieser beiden Umläufe muß das Werkzeug um je eine Teilung axial verschoben werden, um das Gewinde in der Bohrungswandung zu fräsen. Aufgrund der beschriebenen Ausbildung des Werkzeuges reduziert sich die Schnittkraft auf die Hälfte. Außerdem tritt im kritischen Bereich 8 am Übergang vom Frästeil 3 in den Senker 2 aufgrund der geringen Schnittkräfte nur noch ein sehr geringes Biegemoment auf, so daß die Gefahr eines Bruches des Werkzeuges ausgeschlossen ist.

Fig. 3 zeigt eine Werkzeug, mit dem besonders schwierig zu bearbeitende Werkstoffe oder besonders lange Gewinde ohne die Gefahr eines Bruches einwandfrei gefräst werden können. So sind die Gewindezähne 7 nur auf jeder vierten Teilung vorgesehen, d.h. je drei Teilungen des Frästeiles 3 sind als freie Teilungen ohne Gewindezähne ausgebildet. Auf diese Weise werden die Schnittkräfte im Vergleich zur Ausführungsform nach Fig. 1 deutlich verringert. Im Vergleich zum herkömmlichen Werkzeug gemäß Fig. 2 wird die Schnittkraft auf ein Viertel reduziert, so daß auch das Biegemoment im kritischen Querschnitt 8 im Bereich zwischen dem Senker 2 und dem Frästeil 3 erheblich verringert ist. Allerdings sind zur Herstellung des vollständigen Gewindes vier Umläufe erforderlich, wobei das Werkzeug entsprechend axial verschoben wird. Im übrigen ist das Werkzeug gemäß Fig. 3 ausgebildet wie die Ausführungsform gemäß Fig. 1.

In gleicher Weise ist es möglich, im Frästeil 3 beispielsweise zwei freie Teilungen anzuordnen, so daß die Gewindezähne 7 in jeder dritten Teilung vorhanden sind. Dann sind auch drei Umläufe des Werkzeuges um die Achse der Bohrung erforderlich, um in der Bohrungswandung das Gewinde vollständig zu fräsen. Die Schnittkraft ist bei einem derartigen Werkzeug ebenfalls im Vergleich zum herkömmlichen Werkzeug nach Fig. 2 wesentlich verringert, so daß eine Bruchgefahr beim Fräsen des Gewindes nicht besteht.

Darüber hinaus kann das Werkzeug auch so ausgebildet sein, daß nur auf jeder fünften oder sechsten usw. Teilung Gewindezähne 7 vorhanden sind. Entsprechend erhöht sich die Anzahl der notwendigen Umläufe des Werkzeuges um die Achse der Bohrung beim Gewindefräsen, um das Gewinde vollständig zu fertigen.

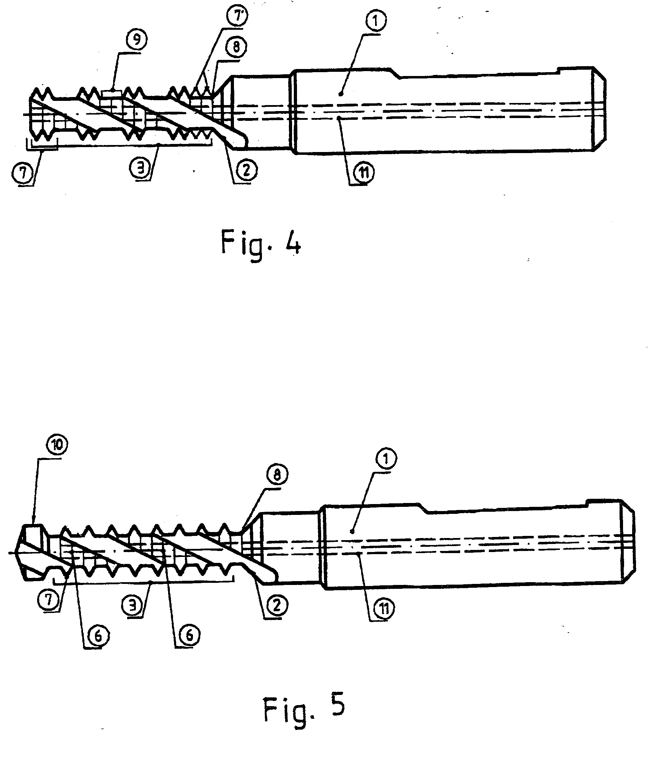

Die Anordnung freier Teilungen kann auch als Muster erfolgen, so daß beispielsweise an zwei Teilungen die Gewindezähne 7 vorhanden sind, während sich in den anschließenden zwei Teilungen keine Gewindezähne befinden. Ein derartiges Ausführungsbeispiel zeigt Fig. 4. Hier sind am freien Ende des Frästeiles 3 in zwei aufeinanderfolgenden Teilungen jeweils die Gewindezähne 7 vorgesehen. Dann folgt ein Bereich 9, in dem zwei freie Teilungen angeordnet sind, d.h. in dem keine Gewindezähne vorgesehen sind. Daran anschließend folgen wiederum zwei Teilungen mit Gewindezähnen 7, an die ihrerseits der Bereich 9 anschließt, der sich über zwei Teilungen erstreckt und in dem keine Gewindezähne vorgesehen sind. Auch durch eine solche Werkzeugausbildung werden die Schnittkräfte im Vergleich zum herkömmlichen Werkzeug nach Fig. 2 erheblich verringert. Insbesondere tritt im kritischen Bereich 8 am Übergang vom Frästeil 3 in den Senker 2 kein hohes Biegemoment auf, so daß auch keine Bruchgefahr für das Werkzeug besteht. Wie bei den vorigen Ausführungsformen kann sein Frästeil 3 große Länge haben, ohne daß die Gefahr besteht, daß es beim Gewindefräsen bricht. Bei der Ausführungsform nach Fig. 4 werden zwei Umläufe des Werkzeuges um die Bohrungsmittelachse benötigt. Das Werkzeug muß während des beschriebenen Zirkularfräsens in axialer Richtung um zwei Teilungen versetzt werden, um ein vollständiges Gewinde in der Bohrungswandung zu fräsen.

Fig. 5 zeigt ein Werkzeug, das als Bohrgewindefräser ausgebildet ist. Der Frästeil 3 ist an seinem freien Ende mit einem Bohrteil 10 versehen, mit dem die Bohrung im Werkstück hergestellt werden kann. Mit diesem Werkzeug wird zunächst durch Axialvorschub mit dem Bohrteil 10 die Bohrung im Werkstück hergestellt. Der Bohrungsdurchmesser des Bohrteiles 10 ist größer als der Arbeitsdurchmesser der Gewindezähne 7, so daß diese beim Bohrvorgang nicht in Berührung mit der Bohrungswandung gelangen. Sobald die gewünschte Bohrtiefe erreicht ist, wird das weiterhin um seine Achse rotierende Werkzeug quer zur Achse der Bohrung nach außen und anschließend um diese Achse umlaufend bewegt. Hierbei wird mit den Gewindezähnen 7 in der Bohrungswandung das entsprechende Gewinde erzeugt. Da beim Ausführungsbeispiel nach Fig. 5 an jeder zweiten Teilung keine Gewindezähne auf den Stollen 6 vorgesehen sind, sind zwei Umläufe des Werkzeuges um die Achse der Bohrung erforderlich, um in der Bohrungswandung das Gewinde zu fertigen. Während dieses Zirkularfräsvorganges wird das Werkzeug entsprechend der gewünschten Gewindesteigung axial bewegt. Entsprechend dem axialen Verschiebeweg ändert sich die axiale Länge des Freistiches am Gewindegrund, der vom Bohrteil 10 erzeugt wird, in Abhängigkeit von der Anzahl der notwendigen Umläufe des Werkzeuges um die Achse der Bohrung.

Beim Bohrgewindefräser kann der Frästeil 3 auch eine Ausbildung haben, wie sie zuvor erläutert worden ist.

Die Gewindefräserzähne 7, die sich in der Nähe des kritischen Querschnittes 8 des Werkzeuges befinden, müssen nicht unbedingt ausgesetzt werden, da ihr Beitrag zum gesamten Biegemoment verhältnismäßig gering ist. Darum können, wie dies beispielhaft in den Fig. 3 und 4 dargestellt ist, unmittelbar im Anschluß an den kritischen Bereich 8 die Gewindezähne 7' vorgesehen sein, die jeweils in Umfangsebenen angeordnet sind, die einen einer Teilung entsprechenden Abstand voneinander haben. Während des Gewindefräsvorganges wirkt im Bereich dieser Gweindezähne 7' nur ein kleiner Hebelarm, so daß das Biegemoment in diesem Bereich noch so klein ist, daß keine Bruchgefahr für das Werkzeug besteht.

Die beschriebenen und dargestellten Werkzeuge sind jeweils mit dem Senker 2 versehen, so daß mit einem solchen Werkzeug zentrisch oder zirkular gesenkt werden kann. Die beschriebene Ausbildung des Frästeiles 3 ist aber auch bei Werkzeugen einsetzbar, die einen Senker nicht aufweisen.

Bei sämtlichen Ausführungsformen können die Werkzeuge mit einer Kühlmittelzuführung 11 versehen sein.

## Patentansprüche

1. Gewindefräser mit einem Schaft und einem Frästeil, der in Umfangsebenen liegende Gewindezähne aufweist, die in Teilungen angeordnet sind,
dadurch gekennzeichnet, daß in Abständen die Gewindezähne (7) von Teilungen innerhalb einer Umfangsebene vollständig fehlen.

2. Gewindefräser nach Anspruch 1,
dadurch gekennzeichnet, daß die Teilungen mit fehlenden Gewindezähnen (7) in gleichmäßigen Abständen längs des Frästeiles (3) vorgesehen sind.

3. Gewindefräser nach Anspruch 1,
dadurch gekennzeichnet, daß die Teilungen mit fehlenden Gewindezähnen (7) in ungleichmäßigen Abständen längs des Frästeiles (3) vorgesehen sind.

4. Gewindefräser nach einem der Ansprüche 1 bis 3,
dadurch gekennzeichnet, daß nach einer Teilung mit Gewindezähnen (7) mindestens eine Teilung ohne Gewindezähne folgt.

5. Gewindefräser nach einem der Ansprüche 1 bis 3,
dadurch gekennzeichnet, daß nach einer Teilung mit Gewindezähnen (7) mindestens eine Teilung mit Gewindezähnen (7) folgt.

6. Gewindefräser nach einem der Ansprüche 1 bis 5,
dadurch gekennzeichnet, daß der Frästeil (3) mindestens eine wendelförmig oder gerade verlaufende Spannut (4, 5) aufweist.

7. Gewindefräser nach einem der Ansprüche 1 bis 6,
dadurch gekennzeichnet, daß zwischen dem Frästeil (3) und dem Schaft (1) ein Senker (2) vorgesehen ist.

8. Gewindefräser nach einem der Ansprüche 1 bis 7,
dadurch gekennzeichnet, daß an dem vom Schaft (1) abgewandten Ende des Frästeiles (3) ein Bohrteil (10) vorgesehen ist.

9. Gewindefräser nach Anspruch 8,
dadurch gekennzeichnet, daß der Bohrteil (10) größeren Arbeitsdurchmesser hat als der Frästeil (3).
